# EUROPÄISCHE PATENTSCHRIFT

(11) **EP 2 762 733 B1**
(45) Veröffentlichungstag und Bekanntmachung des Hinweises auf die Patenterteilung: **15.05.2019**
(21) Anmeldenummer: 13197189.7
(22) Anmeldetag: 13.12.2013
(51) Int. Cl.: F16B 5/06, F16B 5/12

(54) **Befestigungselement**
Fastening element
Elément de fixation

(30) Priorität: 30.01.2013 DE 102013201561
(43) Veröffentlichungstag der Anmeldung: 06.08.2014
(73) Patentinhaber: Magna Exteriors (Germany) GmbH, 66280 Sulzbach (DE)
(72) Erfinder: Huttenlocher, Marc, 72622 Nürtingen (DE); Hartmann, Hans-Jürgen, 55743 Idar-Oberstein (DE)
(74) Vertreter: Rausch, Gabriele

(56) Entgegenhaltungen:
- DE-A1- 19 649 977
- DE-A1-102005 044 277
- DE-U1-202010 008 360

## Beschreibung

Die vorliegende Erfindung betrifft ein Verbindungselement mit einem zweiten Bauteil und einem daran befestigbaren ersten Bauteil.

### Stand der Technik

Bei der Montage von Kraftfahrzeugen wird insbesondere auf eine genaue Ausrichtung von sogenannten Zierelementen größten Wert gelegt, da diese im Wesentlichen für den späteren optischen Eindruck des Kraftfahrzeuges verantwortlich sind. Übliche Befestigungsmethoden derartiger Zierleisten bzw. Zierelemente sind beispielsweise ein Verkleben bzw. ein Verclipsen mit der Karosserie des Kraftfahrzeuges. Bei einem Verkleben besteht dabei jedoch zumindest solange, bis die Klebemasse erhärtet ist, die Gefahr, dass das Zierelement verrutscht und dadurch nicht einwandfrei ausgerichtet am Fahrzeug angebracht werden kann. Auch bei Clipsverbindungen, bei welchen beispielsweise das Zierelement über ein Eingriffselement in/an einer karosserieseitigen Öffnung befestigt wird, kann das Problem bestehen, dass aufgrund des erforderlichen Spiels zwischen Eingriffselement und karosserieseitiger Öffnung keine exakt definierbare Einbaulage erzielt werden kann. Zudem tritt für den Bereich der Zulieferindustrie das Problem auf, dass Kunden auch an lackierten Metall- oder Kunststoff Bauteilen Zierelemente befestigen wollen, wobei die Lackschichten der unterschiedlichen Automobilhersteller unterschiedliche Dicken aufweisen. Selbst bei einem Fahrzeug, sind die unterschiedlichen Lacke und damit die Lackschichten teilweise unterschiedlich, weil von der Farbe und dem Lacksystem abhängig.

Die vorliegende Erfindung beschäftigt sich daher mit dem Problem, eine Befestigungsanordnung zu schaffen, welche einerseits eine zuverlässige Befestigung eines ersten Bauteils an einem zweiten Bauteil ermöglicht und zugleich variable einsetzbar ist und Spalte beim Anbringen vermeidet. Aus der DE 102008024894 ist ein Befestigungssystem bekannt, das eine Positionierung eines ersten Bauteils auf einem zweiten Bauteil mit hoher Präzision erlaubt. Dabei wird durch materialabtragendes Eindrücken einer Nase in eine Öffnung eine exakte Verbindungsposition erreicht. Die Verbindung ist dabei natürlich nicht mehr zerstörungsfrei lösbar.

Aus der DE 202010008360 ist eine Verbindungsanordnung bekannt, die als von den zu verbindenden Bauteilen getrennte Komponente ausgestaltet ist. Durch die Anordnung mit gezahnter Rastlippe und gezahnten Aufnahmeelementen ist es möglich Fertigungstoleranzen auszugleichen. Zu diesem Zweck ist die Verzahnung auch unter einem spitzen Winkel angeordnet. Die Verbindungsanordnung weist eine Vielzahl an Aufnahmeelemente auf und ist aufwändig gestaltet.

DE 19649977A1 zeigt zu verbindende Kunststoffbauteile, die in einem Außenspiegel eines Fahrzeugs liegen, wobei keines der Bauteile lackiert ist. Eine einfache gezahnte Verbindung ist mit einem Rastfuss verrastet.

DE102005044277A1 zeigt eine pilzkopfartige Befestigung mit einer zweigeteilten Zunge 5. Die Bauteile weisen keine Verrastung auf, sondern werden durch die Form der Zunge 5 gehalten, die eine Aufnahme für das zweite Bauteil umfasst.

Es ist Aufgabe der Erfindung eine Verbindungsanordnung zur Verfügung zu stellen, die ohne großen Aufwand und Kosten herstellbar ist, aber die Toleranzproblem durch unterschiedliche Lackdicken löst und eine einfache Montage und Demontage erlaubt.

Gelöst wird die Aufgabe mit einem Verbindungselement für das Verbinden zweier Kunststoffbauteile in einem Kraftfahrzeug gemäß Anspruch 1. Durch diese Gestaltung der Verbindung ist eine Montage von Bauteilen auch bei unterschiedlichen Lackdicken sichergestellt, da die einstellbare Verrastung Unterscheide ausgleicht.

Mit der erfindungsgemäßen Lösung lassen sich auch Bauteile, deren Höhe eingeschränkt ist schnell und einfach montieren. Die für die Montage aufzuwendenden Kräfte sind durch die Verwendung der einfachen Verrastungsmittel niedrig, aber sehr sicher und muss nicht mehr nachgeprüft werden. Mit der erfindungsgemäßen Verbindung wird die Montagedauer reduziert und vereinfach, da die Montage in einer Richtung, ohne große Verbiegung anderer Kunststoffbauteile erfolgt.

Vorteilhafterweise ist die Befestigungslasche mit einem rechteckigen oder gerundeten Querschnitt ausgebildet, je nachdem wie groß das zu befestigenden Bauteil ist und welche Gewichte abgefangen werden müssen.

Vorteilhafterweise besteht die Befestigungslasche aus einer zweiten Länge, die sich aus einem dritten Längenabschnitt, der ersten Länge und einer Endlänge zusammensetzt, wobei der dritte Längenabschnitt mindestens die Bauhöhe des ersten Bauteils umfasst. Dadurch beginnt der Längenbereich mit der Verzahnung außerhalb der Bauhöhe des Bauteils und lässt sich im Spitzgusswerkzeug mit einem Schieber, der sich senkrecht zur Verzahnung bewegen lässt, herstellen.

Alternativ dazu lässt sich das Bauteil auch unter Zuhilfenahme eines Konturauswerfers herstellen.

Um verschiedene Bauhöhen des ersten Bauteils abbilden zu können, ist es von Vorteil, wenn der Bereich der Verzahnung der zweiten Längen 12 an der Befestigungslasche erst nach einer Länge beginnt, die der Bauhöhe des Bauteils plus der Dicke des zweiten Bauteils entspricht.

Zur einfachen Befestigung ist es von Vorteil, dass das zweite Bauteil mindestens eine Rastlasche hat, die flexible am Bauteil angespritzt ist. Weiterhin ist es von Vorteil, dass das zweite Bauteil mindestens eine Lagerfläche hat, die am Bauteil angespritzt ist und in die Öffnung hineinragt.

Um die Verbindung auf einfache Art und Weise trennen zu können, ist es von Vorteil, dass die Rastlasche eine Hilfslasche aufweist, die dazu dient, die Rastlasche entgegen ihrer Rastungsrichtung zu verschwenken.

### Beschreibung der Erfindung

Die Erfindung wird nachfolgend beispielhaft unter Bezugnahme auf die beigefügte Zeichnung beschrieben.
Fig. 1 zeigt eine schematische Darstellung des ersten Bauteils,
Figur 2 zeigt erstes und zweites Bauteil in verrasteten Zustand,
Figur 3 zeigt eine weitere Ausführungsform des Verrastungselements.
Fig. 4 zeigt eine alternative Ausführungsform

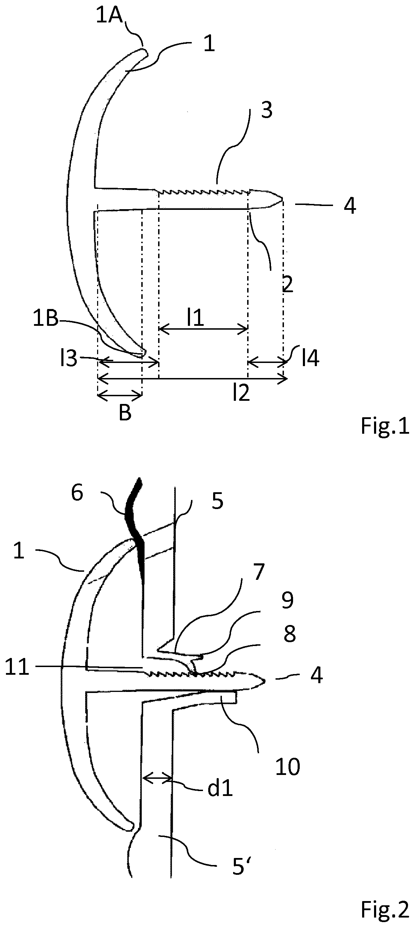

Figur 1 zeigt ein erstes Bauteil im Querschnitt, beispielsweise einen Chrom- Zierstab, wie er an einem Kühlergitter befestigt werden soll. Das erste Bauteil 1 weist einen C-förmigen Querschnitt auf und eine Befestigungslasche 2, die in diesem Beispiel angespritzt ist. Die beiden Endpunkte 1A 1B des Zierstabs sollen dabei bündig auf dem Kühlergitter anliegen. Die angespritzte Befestigungslasche 2 besitzt eine zweite Länge 12, die sich aus mehreren Bereichen zusammensetzt. Von der Seite des ersten Bauteils 1 her gesehen, erstreckt sich ein dritter Längenabschnitt 13, eine erste Länge L1, sowie eine Endlänge 14. Im dritten Längenabschnitt 13 sowie entlang der Endlänge 14 ist die Befestigungslasche an ihrer Oberfläche nicht strukturiert. Im Bereich der ersten Länge 11 findet sich eine Verzahnung 3, wobei die Zähne der Verzahnung gegen das erste Bauteil 1 geneigt sind. Im Bereich der Endlänge 14 ist die Befestigungslasche spitz zulaufend gestaltet. Diese Ausgestaltung ist für die Erfindung nicht zwingend vorgesehen, sie ist lediglich vorteilhaft, um das Bauteil einfach einführen und zentrieren zu können. Das erste Bauteil 1 weist eine Bauhöhe B auf, die kleiner ist als der dritte Längenabschnitt 13 der Befestigungslasche 2. Das ist für die Herstellung des Kunststoffspritzgussteiles wichtig, da somit die Verrastung 3 mitgespritzt werden kann und ein Schieber im Spitzgusswerkzeug senkrecht zur Befestigungslasche verschiebbar angeordnet werden kann. Der Schieber bewegt sich dabei knapp an den Endpunkt 1A des ersten Bauteils 1 entlang.

In Figur 2 wird das erste Bauteil 1 im verrasteten Zustand mit dem zweiten Bauteil 5, 5' gezeigt. Das zweite Bauteil 5 weist zumindest in einem Bereich eine Lackierung 6 auf. Die Lackierung ist auf dem Kunststoff aufgetragen und weist je nach Fahrzeughersteller oder unterschiedlichen Lacksystemen desselben Herstellers unterschiedliche Dicken auf. Die Verbindung der beiden Bauteile soll aber so gestaltet sein, dass der Endpunkt 1A sauber auf der lackierten Oberfläche des zweiten Bauteils 5 anliegt, unabhängig von der Schichtdicke der Lackierung. Das zweite Bauteil 5 weist eine Öffnung 11 auf, in die die Befestigungslasche eingeführt ist. In diesem Ausführungsbeispiel ist die Befestigungslasche auf einer Lagerung 10 geführt, die vom unteren Teil des zweiten Bauteils 5' gebildet wird. Die Lagerung 10 ist dabei als nahezu rechtwinklig vom Bauteil 5' nach innen gerichteter Absatz gestaltet, der leicht in Richtung des Zentrum der Öffnung gerichtet ist.

Auf der anderen Seite des Bauteils ist eine Rastlasche 7 direkt an der Öffnung 11 angespritzt. Die Rastlasche 7 ragt ebenfalls in die Öffnung 11 und lässt sich durch eine Schwächung in der Dicke d1 des zweiten Bauteils 5 nach innen abbiegen. Die Rastlasche ist federnd ausgeführt und weist eine Nase 8 auf, die in die Verzahnung 3 eingreift. Eine Hilfslasche 9, die an der gegenüberliegenden Seite angebracht ist, dient zur Entlastung der Rastverbindung und zur Demontage des ersten Bauteils 1. Beim Verbinden der beiden Bauteile wird die Befestigungslasche in die Öffnung 11 gesteckt und entlang der Lagerung 10 in das Bauteil 5 geschoben, wobei die Nase 8 entlang der Verzahnung geschoben wird. Das erste Bauteil wird solange angedrückt, bis das Ende 1A an der Lackierung 6 ohne Spalt anliegt. Durch die Richtung der Verzahnung, bleibt eine formschlüssige Verbindung zwischen der Nase 8 und der Verzahnung 3 bestehen.

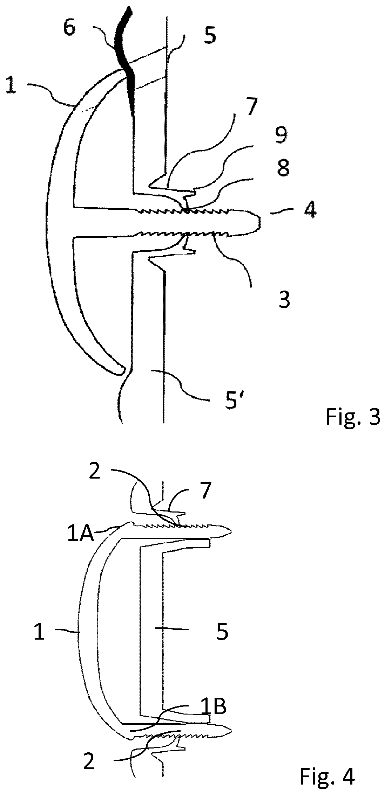

Figur 3 zeigt eine alternative Ausführungsform der Verbindung. In dieser Ausführung besitzt die Befestigungslasche 2 zwei Verzahnungsbereiche oben und unten angebracht. Anstatt einer Lagerung wird die Befestigungslasche von einer zweiten Rastlasche fixiert und zentriert. Diese Ausführungsform ist dann von Vorteil, wenn man symmetrische Bauteile 5, 5' herstellen will und kann. Bei der Verwendung von zwei Verzahnungen 3 mit zwei Verzahnungsraster verwendet werden, die versetzt zueinander ausgeformt sind. Damit wird eine feinere Einstellung der Verrastung möglich.

Der Querschnitt der Befestigungslasche und der zugeordneten Öffnung kann an die Anforderungen der Verbindung angepasst werden. Im einfachsten Fall wird die Befestigungslasche ein Zylinder mit kreisförmigen oder elliptischen Querschnitt sein, der in eine kreisförmige Öffnung eingeführt wird. Möchte man eine breitere Verzahnungsfläche haben und zur Aufnahme größerer Kräfte einen breiteten Rasthaken verwenden, bietet sich ein rechteckiger Querschnitt an, oder zumindest ein Querschnitt, in dem der Bereich der Verzahnung eben gestaltet ist. Die dazu passende Rastlasche mit ihrer Nase 8 kann dann ebenfalls in der Breite angepasst hergestellt werden.

Die zu verbindenden Bauteile sind aus Kunststoff im Spritzgussverfahren hergestellt, wobei Kunststoffe verwendet werden, die eine gewisse Elastizität aufweisen, um die angespritzte Rastlasche federnd beweglich zu gestalten. Die Befestigungslasche kann in einer Ausführungsform verchromt sein, was die Elastizität des Kunststoffs sehr einschränkt und die Verzahnung eher steif und spröde werden lässt. Für die Befestigung ist das aber eher ein Vorteil, da die elastische Rastlasche elastisch ist und in die sprödere Verzahnung optimal eingreift.

Die Ausführungsform nach Figur 4 zeigt ein erstes Bauteil 1 mit zwei Befestigungslaschen 2, die jeweils an den Endlagen 1A und 1B angebracht sind. In der gezeigten Ausführungsform besitzen die Befestigungslaschen 2 jeweils eine Verzahnung 3, die jeweils im Eingriff mit einer Nase 8 der Rastlasche 7 steht.

Auch in dieser Ausführungsform ist die Verwendung von zwei Verzahnungen für jeweils eine Befestigungslasche eine Option.

Die Position der Befestigungslaschen 2 am ersten Bauteil 1 kann dabei mittig oder an den Enden 1A, 1B des Bauteiles sein, allerdings ist auch jede andere Position denkbar.

Entlang der Längserstreckung der Zierleiste, dem ersten Bauteil 1 sind eine Vielzahl von Befestigungslaschen vorgesehen. Insbesondere können die unterschiedlichen Ausführungsformen für die Befestigung einer Zierleiste miteinander kombiniert werden.

### Bezugszeichenliste

1 Erstes Bauteil
2 Befestigungslasche
3 Verzahnung
4 Laschenende
5 Zweites Bauteil
6 Lackierung
7 Rastlasche
8 Nase
9 Hilfslasche
10 Lagerung
11 Öffnung
B Bauhöhe
12 zweite Länge
13 dritten Länge
11 erste Länge
14 Endlänge
d1 Dicke
1A, 1B Ende

## Patentansprüche

1. Vorrichtung für das Verbinden zweier Kunststoffbauteile in einem Kraftfahrzeug mit einem Verbindungselement mit mindestens einer Befestigungslasche (2) und einem Verrastungsmittel, wobei das erste Bauelement (1) mindestens eine Befestigungslasche (2) aufweist und das zweite Bauteil (5) mindestens teilweise mit einer Lackschicht (6) versehen ist und mindestens eine Öffnung (11) zur Aufnahme der Befestigungslasche (2) aufweist, wobei die Befestigungslasche (2) zumindest entlang eines Teils ihrer Oberfläche eine Verzahnung (3) über eine erste Länge (11) besitzt, wobei das zweite Bauteil (5, 5') mindestens eine Rastlasche (7) hat, wobei das erste Bauelement (1) einen C-förmigen Querschnitt aufweist und die Befestigungslasche (2) mit einem seitlich in die Öffnung (11) ragenden Verrastungsmittel (7, 8, 9) verrastbar ist, **dadurch gekennzeichnet, dass** ein Endpunkt (1A) des C-förmigen Querschnitts auf der lackierten Oberfläche des zweiten Bauteils (5, 5') anliegt, wobei die Rastlasche (7) flexible am zweiten Bauteil (5, 5') angespritzt ist und die Rastlasche (7) eine Hilfslasche (9)aufweist, die an der dem Verrastungsmittel (8) gegenüberliegenden Seite der Rastlasche (7) angebracht ist.

2. Vorrichtung nach Anspruch 1, **dadurch gekennzeichnet, dass** die Befestigungslasche 2 einen rechteckigen oder gerundeten Querschnitt aufweist.

3. Vorrichtung nach Anspruch 1, **dadurch gekennzeichnet, dass** die Befestigungslasche eine zweite Länge (12) hat, die sich aus einem dritten Längenabschnitt (13), der ersten Länge (11) und einer Endlänge (14) zusammensetzt, wobei der dritte Längenabschnitt (13) mindestens die Bauhöhe (B) des ersten Bauteils (1) umfasst.

4. Vorrichtung nach Anspruch 3, **dadurch gekennzeichnet, dass** der dritte Längenabschnitt (13) zusätzlich die die Dicke (d1) des zweiten Bauteils umfasst.

5. Vorrichtung nach Anspruch 1, **dadurch gekennzeichnet, dass** das zweite Bauteil (5, 5') mindestens eine Lagerfläche (10) hat, die am zweiten Bauteil (5, 5') angespritzt ist und in die Öffnung hineinragt.

6. Vorrichtung nach Anspruch 1, **dadurch gekennzeichnet, dass** die Befestigungslaschen (2) mittig oder an den Enden (1A, 1B) des ersten Bauteils angespritzt sind.

7. Vorrichtung nach Anspruch 1, **dadurch gekennzeichnet, dass** die Befestigungslasche zwei Verzahnungen (3) aufweist.

8. Vorrichtung nach Anspruch 7, **dadurch gekennzeichnet, dass** die zwei Verzahnungen (3) zueinander versetzte Zähne aufweisen.

## Claims

1. Apparatus for connecting two plastic components in a motor vehicle having a connecting element with at least one fastening clip (2) and a latching means, the first element (1) having at least one fastening clip (2), and the second component (5) being provided at least partially with a paint coat (6) and having at least one opening (11) for receiving the fastening clip (2), the fastening clip (2) having a toothing system (3) over a first length (l1) at least along part of its surface, the second component (5, 5') having at least one latching clip (7), the first element (1) having a C-shaped cross section, and it being possible for the fastening clip (2) to be latched to a latching means (7, 8, 9) which protrudes laterally into the opening (11), **characterized in that** an end point (1A) of the C-shaped cross section bears on the painted surface of the second component (5, 5'), the latching clip (7) being moulded flexibly on the second component (5, 5'), and the latching clip (7) having an auxiliary clip (9) which is attached on that side of the latching clip (7) which lies opposite the latching means (8).

2. Apparatus according to Claim 1, **characterized in that** the fastening clip (2) has a rectangular or rounded cross section.

3. Apparatus according to Claim 1, **characterized in that** the fastening clip has a second length (l2) which is composed of a third length section (l3), the first length (l1) and an end length (l4), the third length section (l3) comprising at least the overall height (B) of the first component (1).

4. Apparatus according to Claim 3, **characterized in that** the third length section (l3) additionally comprises the thickness (d1) of the second component.

5. Apparatus according to Claim 1, **characterized in that** the second component (5, 5') has at least one bearing face (10) which is moulded on the second component (5, 5') and protrudes into the opening.

6. Apparatus according to Claim 1, **characterized in that** the fastening clips (2) are moulded centrally or at the ends (1A, 1B) of the first component.

7. Apparatus according to Claim 1, **characterized in that** the fastening clip has two toothing systems (3).

8. Apparatus according to Claim 7, **characterized in that** the two toothing systems (3) have teeth which are offset with respect to one another.

## Revendications

1. Dispositif pour l'assemblage de deux composants en matière plastique dans un véhicule automobile avec un élément d'assemblage présentant au moins une patte de fixation (2) et un moyen d'encliquetage, dans lequel le premier composant (1) présente au moins une patte de fixation (2) et le second composant (5) est muni au moins partiellement d'une couche de laque (6) et présente au moins une ouverture (11) destinée à recevoir la patte de fixation (2), dans lequel la patte de fixation (2) comporte le long d'au moins une partie de sa surface une denture (3) sur une première longueur (l1), dans lequel le second composant (5, 5') présente au moins une patte d'encliquetage (7), dans lequel le premier composant (1) présente une section transversale en forme de C et la patte de fixation (2) peut être encliquetée avec un moyen d'encliquetage (7, 8, 9) s'engageant latéralement dans l'ouverture (11), **caractérisé en ce qu'**un point final (1A) de la section transversale en forme de C est situé sur la surface laquée du second composant (5, 5'), dans lequel la patte d'encliquetage (7) est projetée sous forme flexible sur le second composant (5, 5') et la patte d'encliquetage (7) présente une patte auxiliaire (9), qui est placée sur le côté de la patte d'encliquetage (7) situé à l'opposé du moyen d'encliquetage (8).

2. Dispositif selon la revendication 1, **caractérisé en ce que** la patte d'encliquetage présente une section transversale rectangulaire ou arrondie.

3. Dispositif selon la revendication 1, **caractérisé en ce que** la patte de fixation présente une deuxième longueur (l2), qui se compose d'une troisième partie de longueur (l3), de la première longueur (l1) et d'une longueur finale (l4), dans lequel la troisième partie de longueur (l3) comprend au moins la hauteur de montage (B) du premier composant (1).

4. Dispositif selon la revendication 3, **caractérisé en ce que** la troisième partie de longueur (l3) comprend en outre l'épaisseur (d1) du second composant.

5. Dispositif selon la revendication 1, **caractérisé en ce que** le second composant (5, 5') présente au moins une face d'appui (10), qui est projetée sur le second composant (5, 5') et qui pénètre dans l'ouverture.

6. Dispositif selon la revendication 1, **caractérisé en ce que** les pattes de fixation (2) sont projetées au milieu ou aux extrémités (1A, 1B) du premier composant.

7. Dispositif selon la revendication 1, **caractérisé en ce que** la patte de fixation présente deux dentures (3).

8. Dispositif selon la revendication 7, **caractérisé en ce que** les deux dentures (3) présentent des dents décalées les unes par rapport aux autres.
